Europäisches Patentamt

European Patent Office

Office européen des brevets

(19)

(11) **EP 1 289 189 A1**

(12) **EUROPEAN PATENT APPLICATION**

(43) Date of publication:
05.03.2003 Bulletin 2003/10

(51) Int Cl.⁷: **H04L 12/24**

(21) Application number: 01402277.6

(22) Date of filing: 31.08.2001

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(71) Applicant: **ALCATEL<br>75008 Paris (FR)**<br><br>(72) Inventors:<br>• **van den Bosch, Sven Jozef Jeanne<br>9080 Lochristi (BE)** | • **De La Vallee, Paloma<br>2630 Aartselaar (BE)**<br>• **DeGrande, Nathalie Maria Cornelia<br>9290 Overmere (BE)**<br>• **Van Hoey, Gert<br>9050 Gentbrugge (BE)**<br><br>(74) Representative: **Narmon, Gisèle<br>Industrial Property Department,<br>Alcatel Bell N.V.,<br>Francis Wellesplein 1<br>2018 Antwerpen (BE)** |

(54) **Network management system, network, method and computer program product**

(57)    Network management systems for managing networks comprising nodes adapt their information parameters, via a one-step-replacement of old information parameters by new information parameters. These network management systems do not keep any transition-overview and must accept the new situation. By introducing a more-than-one-step-replacement via intermediate states, a transition-overview is kept, with said intermediate states allowing so-called make-before-break transitions. Preferably the adaptions are made in an optimised way, by defining constants and variables, and processing at least one objective and constraints, for example all being a function of routing parameters and/or of capacity parameters and/or of intermediate states. Networks comprising such network management systems as well as methods for managing such networks and comprising a step of adapting information parameters via intermediate states are more efficient and reliable. Existing hardware and software can be improved by introducing a computer program product comprising an adapting function for adapting information parameters via intermediate states.

Fig. 1

EP 1 289 189 A1

Printed by Jouve, 75001 PARIS (FR)

**Description**

The invention relates to a network management system for managing a network comprising nodes, which network management system comprises a memory for storing information parameters.

Such a network management system is generally known, with said network for example being an Automatically Switched Transport Network or ASTN, and with said nodes for example being switches, routers, bridges, cross-connects etc., with links between nodes for example being electrical links or optical links. Said network management system generally comprises a processor system consisting of a processor and said memory, with said memory comprising said information parameters for example defining the subsequent links to be chosen by an electrical signal (like a packet signal) or an optical signal (like a modulated wavelength) for travelling from an origin to a destination in said network and/or for example defining the subsequent nodes to be chosen by an electrical signal or an optical signal for travelling from an origin to a destination in said network and/or for example defining the information to be supplied to certain nodes for guiding an electrical signal or an optical signal travelling from an origin to a destination in said network etc.

For example in case of nodes being added or being removed, and/or in case of links being amended, the information parameters in said memory need to be amended.

The known network management system is disadvantageous, inter alia, due to, when amending the information parameters, not keeping any transition-overview and/or due to being obliged to immediately accept a final (new) situation.

It is an object of the invention, inter alia, of providing a network management system as defined in the preamble which can keep a transition-overview and/or which is not immediately confronted with a final (new) situation.

The network management system according to the invention is characterised in that said network management system comprises an adaptor coupled to said memory for, in response to a receival of new information parameters, with said memory comprising old information parameters, adapting information parameters in said memory via intermediate states.

By providing said network management system with the adaptor coupled to the memory for, in response to the receival of new information parameters, with said memory comprising old information parameters, adapting information parameters in said memory via intermediate states, firstly the one-step-replacement of old information parameters by new information parameters is replaced by a more-than-one-step-replacement via intermediate states, which prevents said network management system from being immediately confronted with the final (new) situation, and secondly a transition-overview can be kept, which allows so-called make-before-break transitions.

The invention is based on the insight, inter alia, that an adaptation of all information parameters at once just gives one final result only, and does not give any intermediate results, and, inter alia, that some information parameters can be adapted at once without losing anything, where for other information parameters the subsequent order of the adaptations will be relevant for the final result.

The invention solves the problem, inter alia, of providing a network management system which can keep a transition-overview and/or which is not immediately confronted with a final (new) situation.

Said adaptor generally will form part of said processor system, either separately from said processor, or as a part of (being integrated into) said processor then having an adapting function.

A first embodiment of the network management system according to the invention is characterised in that said network management system comprises an optimiser coupled to said adaptor for optimising said adapting.

Such an optimiser generally will form part of said processor system, either separately from said processor, or as a part of (being integrated into) said processor then having an optimising function.

A second embodiment of the network management system according to the invention is characterised in that said optimising comprises a defining of constants and variables, and a processing of at least one objective and constraints.

Optimising is usually done via an algorithm, whereby said constants and variables for example will define links to be remained, to be deleted and/or to be added for each intermediate state. Said at least one objective for example corresponds with a function of the speed and the performance, which function is to be optimised. Said constraints for example define those links not (never) to be deleted, not (never) to be added, (always) to be remained etc.

A third embodiment of the network management system according to the invention is characterised in that said information parameters comprise routing parameters and/or capacity parameters.

The routing parameters for example define the links and/or nodes to be chosen, and the capacity parameters for example define the capacity (like for example the availabe wavelenghts) necessary for each link and/or each combination of links. Then, said constants and variables for example will define links to be remained, to be deleted and/or to be added for each intermediate state and with respect to routing as well as capacity. And said constraints then for example define those links not (never) to be deleted, not (never) to be added, (always) to be remained etc. with respect to routing as well as capacity, whereby for each intermediate state the capacity available for said links (individual links as well as combinations of links) will be of high importance to said optimising.

A fourth embodiment of the network management system according to the invention is characterised in that said constants, variables, objective and/or constraints are a function of routing parameters and/or of capacity parameters and/or of intermediate states.

Such a network management system will give the best overview, and allow adapting and optimising to the highest extent.

The invention further relates to a network comprising nodes and a network management system for managing said network comprising said nodes, which network management system comprises a memory for storing information parameters.

The network according to the invention is characterised in that said network management system comprises an adaptor coupled to said memory for, in response to a receival of new information parameters, with said memory comprising old information parameters, adapting information parameters in said memory via intermediate states.

Embodiments of the network according to the invention are in correspondence with embodiments of the network management system according to the invention.

The invention yet further relates to a method for managing a network comprising nodes, which method comprises a step of storing information parameters in a memory.

The method according to the invention is characterised in that said method comprises a step of, in response to a receival of new information parameters, with said memory comprising old information parameters, adapting information parameters in said memory via intermediate states.

A first embodiment of the method according to the invention is characterised in that said method comprises a step of optimising said adapting.

Embodiments of the method according to the invention are in correspondence with embodiments of the network management system according to the invention.

The invention also relates to a computer program product to be run via a processor system comprising a processor and a memory for storing information parameters for managing a network comprising nodes.

The computer program product according to the invention is characterised in that said computer program product comprises an adapting function for, in response to a receival of new information parameters, with said memory comprising old information parameters, adapting information parameters in said memory via intermediate states.

A first embodiment of the computer program product according to the invention is characterised in that said computer program product comprises an optimising function for optimising said adapting.

Embodiments of the computer program product according to the invention are in correspondence with embodiments of the network management system according to the invention.

The invention will be further explained more detailledly at the hand of an example shown in the drawing, whereby

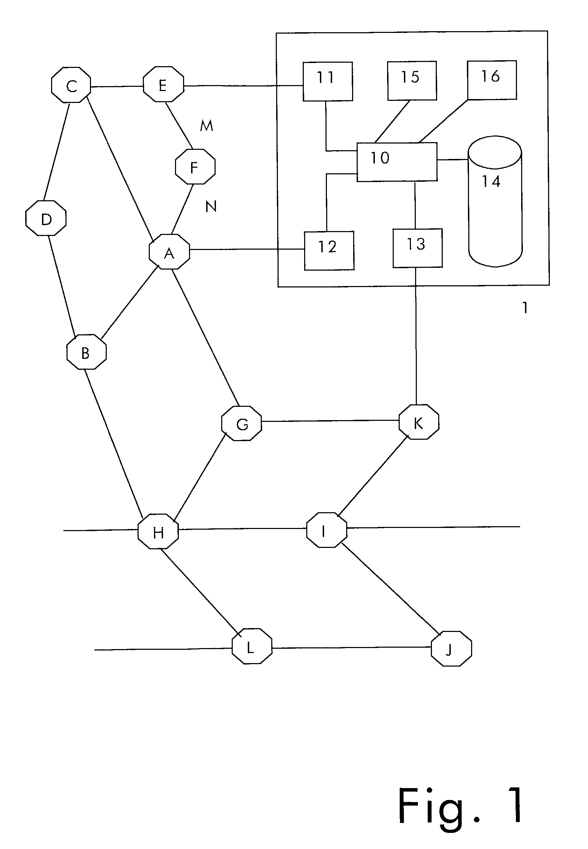

figure 1 discloses a network according to the invention comprising a network management system according to the invention.

Figure 1 discloses a network according to the invention comprising a network management system 1 according to the invention. Said network further comprises nodes A-L, and network management system 1 comprises a processor 10 coupled to a first buffer/interface 11 coupled to node E, a second buffer/interface 12 coupled to node A, a third buffer/interface 13 coupled to node K, a memory 14, an adaptor 15 and an optimiser 16.

Such a network is for example an Automatically Switched Transport Network or ASTN, with said nodes for example being switches, routers, bridges, cross-connects etc., with links between nodes for example being electrical links or optical links. Said processor 10 and memory 14 for example form part of a processor system, with said memory 14 comprising information parameters for example defining the subsequent links to be chosen by an electrical signal or an optical signal for travelling from an origin to a destination in said network and/or for example defining the subsequent nodes to be chosen by an electrical signal or an optical signal for travelling from an origin to a destination in said network and/or for example defining the information to be supplied to certain nodes for guiding an electrical signal or an optical signal travelling from an origin to a destination in said network etc.

Network management system 1 is directly coupled to three nodes E, A and K, and therefore indirectly coupled to the other nodes via said three nodes E, A and K. Of course, when adding more buffer/interfaces, more nodes can be coupled directly with network management system 1.

Network management system 1 as shown in the example in figure 1 is used in a so-called centralised situation (off-line as well as on-line). However, network management system 1 can alternatively also be used in a so-called decentralised situation (off-line as well as on-line), like for example per node or per group of nodes, with said node or said group of nodes each comprising such a network management system (for example in case of a broken link, several protection mechanisms will start looking for and suggesting alternative links/paths, in which case the origin of the broken link (source node) could start, via intermediate states, adapting information parameters in its own or an other memory.

According to a first embodiment, memory 14 comprises information parameters defining the subsequent links to be chosen by an electrical/optical signal for travelling from an origin to a destination in said network. In case of said origin being node E and said destination being node A, memory 14 for example comprises the information parameters link M and link N, being the links between node E and node F and between node F and node A respectively. Said electrical/optical signal for example arrives at node E and is buffered at node E in a buffer not shown, whereby network management system 1 has been informed before (for example via buffer/interface 11) and has generated, after origin information and destination information have been supplied (for example together with a packet identifier), said information parameters link M and link N, which have been supplied to said (electrical/optical signal at) node E (for example together with a packet identifier) etc. Or said electrical/optical signal for example arrives at a node not shown and is buffered at this node in a buffer not shown, whereby network management system 1 has been informed before (for example via a buffer/interface) and has generated, after origin information and destination information have been supplied, said information parameters link M and link N, which have been supplied to said (electrical/optical signal at) said node etc. Or said electrical/optical signal for example arrives at a buffer not shown or at a buffer of network management system 1 and is buffered in this buffer, whereby network management system 1 has been informed before (possibly via a buffer/interface) and has generated, after origin information and destination information have been supplied, said information parameters link M and link N, which have been supplied to (said electrical/optical signal in) said buffer etc. Finally said electrical/optical signal is routed at the hand of said routing parameters.

According to a second embodiment, memory 14 comprises information parameters defining the subsequent nodes to be chosen by an electrical signal or an optical signal for travelling from an origin to a destination in said network. In case of said origin being node E and said destination being node A, memory 14 for example comprises the information parameters node E, node F and node A. Said electrical/optical signal for example arrives at node E and is buffered at node E in a buffer not shown, whereby network management system 1 has been informed before (for example via buffer/interface 11) and has generated, after origin information and destination information have been supplied (for example together with a packet identifier), said information parameters node E, node F and node A, which have been supplied to said (electrical/optical signal at) node E (for example together with a packet identifier) etc. Or said electrical/optical signal for example arrives at a node not shown and is buffered at this node in a buffer not shown, whereby network management system 1 has been informed before (for example via a buffer/interface) and has generated, after origin information and destination information have been supplied, said information parameters node E, node F and node A, which have been supplied to said (electrical/optical signal at) said node etc. Or said electrical/optical signal for example arrives at a buffer not shown or at a buffer of network management system 1 and is buffered in this buffer, whereby network management system 1 has been informed before (possibly via a buffer/interface) and has generated, after origin information and destination information have been supplied, said information parameters node E, node F and node A, which have been supplied to (said electrical/optical signal in) said buffer etc. Finally said electrical/optical signal is routed at the hand of said routing parameters.

According to a third embodiment, memory 14 comprises information parameters defining the information to be supplied to certain nodes for guiding an electrical signal or an optical signal travelling from an origin to a destination in said network. In case of said origin being node E and said destination being node A, memory 14 for example comprises the information parameters node E, node F and node A. Said electrical/optical signal for example arrives at node E and is buffered at node E in a buffer not shown, whereby network management system 1 has been informed before (for example via buffer/interface 11) and has generated, after origin information and destination information have been supplied (for example together with a packet identifier), said information parameters node E, node F and node A, at least parts of which have been supplied to at least node E and node F (for example together with a packet identifier) etc. Or said electrical/optical signal for example arrives at a node not shown and is buffered at this node in a buffer not shown, whereby network management system 1 has been informed before (for example via a buffer/interface) and has generated, after origin information and destination information have been supplied, said information parameters node E, node F and node A, at least parts of which are supplied to at least node E and node F etc. Or said electrical/optical signal for example arrives at a buffer not shown or at a buffer of network management system 1 and is buffered in this buffer, whereby network management system 1 has been informed before (possibly via a buffer/interface) and has generated, after origin information and destination information have been supplied, said information parameters node E, node F and node A, at least parts of which are supplied to at least node E and node F etc. Finally said electrical/optical signal is routed at the hand of said routing parameters.

According to a fourth embodiment, for example in case of nodes being added or being removed, and/or in case of links being amended, the information parameters in said memory need to be amended, whereby a transition-overview need to be kept and/or whit an immediate confrontation with a final (new) situation to be avoided. Thereto, network management system 1 comprises adaptor 15 for, in response to a receival of new information parameters, with said memory 14 comprising old information parameters, adapting information parameters in said memory via intermediate states. And, preferably, network management system 1 comprises optimiser 16 for optimising said adapting, with said optimising comprising a defining of constants and variables, and a processing of at least one objective and constraints. This optimising is usually done via an algorithm, whereby said constants and variables for example will define links to be remained, to be deleted and/or to be added for each intermediate state. Said at least one objective for example corresponds with a function of the speed and the performance, which function is to be maximised. Said constraints for example define those links not (never) to be deleted, not (never) to be added, (always) to be remained etc. Said information parameters usually comprise routing parameters and/or capacity parameters, with the routing parameters for example defining the links and/or nodes to be chosen, and the capacity parameters for example defining the capacity (like for example the availabe wavelenghts) necessary for each link and/or each combination of links. Then, said constants and variables for example will define links to be remained, to be deleted and/or to be added for each intermediate state and with respect to routing as well as capacity. And said constraints then for example define those links not (never) to be deleted, not (never) to be added, (always) to be remained etc. with respect to routing as well as capacity, whereby for each intermediate state the capacity available for said links (individual links as well as combinations of links) will be of high importance to said optimising.

A linear program could for example be used for the optimal re-routing order of the routing parameters like for example Label Switched Paths or LSPs and for reporting any problem-LSPs and capacity parameters like for example Wavelength Switched Paths or WSPs (if they exist). The entities that participate are listed below.

- WSPs that exist in *O* (old situation) and *N* (new situation) are collectively called LPtoRemain.
- WSPs that exist in *O* (old situation), but not in *N* (new situation) are called LPtoBeDeleted.
- WSPs that exist in *N* (new situation), but not in *O* (old situation) are called LPtoBeAdded.
- LSPs have an old path and a new path associated with them. Only LSPs that occur in both situations are considered.

The constants and variables associated with the linear program are given in the next table:

$u_{re}^{s}$     Equals 1 if the e-th LPtoRemain is used in intermediate state s and 0 otherwise

$u_{de}^{s}$     Equals 1 if the e-th LPtoBeDeleted is used in intermediate state s and 0 otherwise

$u_{ae}^{s}$     Equals 1 if the e-th LPtoBeAdded is used in intermediate state s and 0 otherwise

$\delta_{k}^{s}$     Equals 1 if the k-th LSP uses its old path (has not transitioned yet) and 0 otherwise

$c_{re}$     Capacity of the e-th LPtoRemain

$c_{de}$     Capacity of the e-th LPtoBeDeleted

$c_{ae}$     Capacity of the e-th LPtoBeAdded

$\omega_{ke}^{old}$     Equals 1 if the current link (whether to remain or to be deleted) is in the old path of the k-th LSP

$\omega_{ke}^{new}$     Equals 1 if the current link (whether to remain or to be added) is in the new path of the k-th LSP

With the above definitions, the mathematical formulation of the linear algorithm can be described:

max     $M \cdot P + S$

$$(i) \qquad P = \sum_{k \in K} \delta_{k}^{s=s_{max}}$$

$$(ii) \qquad S = \sum_{k \in K} \sum_{s \in S} \delta_{k}^{s}$$

$$(iii) \qquad \delta_{k}^{s} \leq \delta_{k}^{s-1} \qquad \forall k \in K, s \in S$$

$$(iv) \qquad u_{re}^{s} = u_{re}^{s-1} \qquad \forall re \in RE, s \in S$$

(v)  $\qquad u_{de}^{s} \leq u_{de}^{s\text{-}1}$  $\qquad \forall de \in DE, s \in S$

(vi)  $\qquad u_{ae}^{s} \geq u_{ae}^{s\text{-}1}$  $\qquad \forall ae \in AE, s \in S$

(vii)

$$\sum_k \omega_e^{new} \cdot d_k^{new} + \sum_k \delta_k^s \cdot \omega_e^{old} \cdot \left[ d_k^{old} - \omega_e^{new} \cdot \min\left\{ d_k^{old}, d_k^{new} \right\} \right]$$

$$- \sum_k \delta_k^{s+1} \cdot \omega_e^{new} \cdot \left[ d_k^{new} - \omega_e^{old} \cdot \min\left\{ d_k^{old}, d_k^{new} \right\} \right] \qquad \forall e \in E, s \in S$$

$$\leq u_{re}^s \cdot c_{re} + u_{ae}^s \cdot c_{ae} + u_{de}^s \cdot c_{de}$$

Possible objectives to be maximised are the performance P and the speed S of a transition from the old situation O to the new situation N, whereby several objectives may be combined into one objective like for example maximising a function of P and S, like for example MP + S, with M for example being equal to a factor 1000 to make the P a thousand times more important than the S, or like for example maximising a function of P and S, like for example XP + YS, with X and Y being chosen in such a way that P and S will have a predefined relative importance. The performance P is defined as the percentage of transitioned LSPs in the final state (= the new situation N) of the transition (constraint i). The transition speed is defined as the sum of old LSPs on their old path over all trunks and transition states (constraint ii). LSPs are not to be switched back to their old path in general (constraint iii). The evolution of the WSPs in the intermediate states is described (constraints iv-vi). WSPs that remain should generally always be there. WSPs that need to be added may not be there in the initial state and may not be removed once they have been added, in general. Finally, WSPs that need to be deleted must be there in the initial state and may generally not be added once they have been removed. Finally, capacity is allocated on new path or old path and on both if the LSP is transitioning (constraint vii). The last constraint also takes into account possible overlaps between the new and the old path of the LSP. In this case, capacity is allocated only once.

It should be noted that, for example in case of sufficient processor capacity being available, in intermediate states it could be useful to allow the switching back of LSPs to their old path and/or to allow the (de)activation of further (intermediate) WSPs. The constraints described above should be considered to be examples of the invention and should not be regarded to limit the scope of protection of the invention. Many further constraints could be used without departing from the scope of this invention.

So, between the initial state and the final state there are now in accordance with the invention intermediate states, with transition states comprising at least these intermediate states and/or said initial state and/or said final state. The number of variables in this (mixed-integer) linear program can be roughly calculated. The number of 0/1 variables for example equals the product of the number of LSPs and the number of transitions plus the product of the number of WSPs and the number of transitions. In a realistic example, the number of LSPs may be a few hundreds or a few thousands or many more and the number of transitions may be limited to a percentage of said few hundreds or a few thousands or many more. The number of WSPs could also be a percentage of said few hundreds or a few thousands or many more. In this case, the number of 0/1 variables is in the order of magnitude of 10.000 or 100.000 or many more. Despite the considerable number of variables in the problem, this algorithm runs quickly.

An example demonstrates the capabilities of the algorithm. This example is deliberately kept simple for presentation purposes. The transition algorithm described is verified for the make-before-break transition of LSPs in a constant WSP configuration.

| Old LSP configuration | New LSP configuration |
| --- | --- |
| LSP0 C-A-B 45 | LSP0 C-D-B 45 |
| LSP1 A-B-D 60 | LSP1 A-C-D 60 |
| LSP2 B-D-C 60 | LSP2 B-A-C 60 |
| LSP3 D-C-A 60 | LSP3 D-B-A 60 |
| LSP4 B-A-C 45 | LSP4 B-D-C 45 |
| LSP5 A-C-D 45 | LSP5 A-B-D 45 |
| LSP6 C-D-B 60 | LSP6 C-A-B 60 |
| LSP7 D-B-A 45 | LSP7 D-C-A 45 |

The transition problem is described above. It encompasses the optimisation of the make-before-break transition of eight LSPs in a network with four nodes and eight links (two links between each pair of nodes, each link for one direction). The links are assumed to be OC-3 (155 Mb/s). They are described by means of the two router IDs (of the connected routers), and the ID of the interface and channel on each router. The reserved capacity for the LSPs is either 45 or 60 Mb/s.

When the LSPs are treated sequentially (or in random order), the transition between both LSP configurations is usually not feasible in a make-before-break fashion. However, with the transition optimisation, the optimal order in which to set up and tear down LSPs is found. The optimal transition for our problem is shown below. It can be checked that, in each intermediate state, capacity is available both on the old and the new path for the LSPs that are about to change their path. Also, in all intermediate states, the capacity available on each of the links is sufficient for the LSP configuration in that state.

The objectives of the optimisation were the transition performance, indicating the portion of make-before-break transitions that are feasible, and the transition speed, indicating the number of intermediate states from which no complete rollback is possible. The transition performance should ideally be one, indicating that a complete make-before-break transition is feasible. Transition performance only takes into account the last state. In a general ASTN, complete rollback can be guaranteed only when the number of intermediate states is zero. If the number of intermediate states is non-zero, WSPs need to be released before the complete transition is realised. If an error occurs at a later stage, rollback will no longer be possible if another client takes any of these WSPs. The transition speed indicates how many transitions are needed to get to this final state and thus serves as a measure for the risk of not being able to do complete rollback. In this example, the performance is 1, the speed 0.694.

**Step 1**
add LSP2 on path B-A-C
delete LSP2 from path B-D-C
**Step 2**
add LSP4 on path B-D-C
add LSP5 on path A-B-D
add LSP7 on path D-C-A
delete LSP4 from path B-A-C
delete LSP5 from path A-C-D
delete LSP7 from path D-B-A
**Step 3**
add LSP1 on path A-C-D
add LSP3 on path D-B-A
delete LSP1 from path A-B-D
delete LSP3 from path D-C-A 2
**Step 4**
add LSP6 on path C-A-B
delete LSP6 from path C-D-B
**Step 5**
add LSP0 on path C-D-B
delete LSP0 from path C-A-B

Each embodiment and/or example can be combined with each other embodiment and/or example. Each part of network management system 1, shown in the form of a block or not shown, can be 100% hardware, 100% software or a mixture of both. Therefore, an adaptor also comprises an adapting function, and an optimiser also comprises an optimising function. Each block shown or not shown can be integrated with each other block shown and/or not shown. In addition to the memory 14 shown, each block can have a further memory not shown for efficiency purposes. And as described before, network management system 1 can be located in a network for managing nodes, but can also be located in each node and/or each group of nodes for managing one or more nodes etc.

Memory 14 can be for example a DPRAM, a table memory, or a server controlled by processor 10 or a further processor not shown, etc. Adaptor 15 can be for example a generator and/or a further processor and/or for example have an adapting function, thereby receiving instructions from processor 10 (for generating new information parameters and their location addresses). Optimiser 16 can be for example a further processor and/or for example have an optimising function, thereby receiving instructions from processor 10 (for receiving and/or processing said constants, variables, at least one objective and/or constraints which are a function of routing parameters and/or of capacity parameters and/or of intermediate states). Each one of adaptor 15 and optimiser 16 can be completely integrated with processor 10, etc. Buffer/interfaces 11, 12 and 13 each for example comprise a shift register and a processor/memory, etc.

**Claims**

1. Network management system for managing a network comprising nodes, which network management system comprises a memory for storing information parameters, **characterised in that** said network management system comprises an adaptor coupled to said memory for, in response to a receival of new information parameters, with said memory comprising old information parameters, adapting information parameters in said memory via intermediate states.

2. Network management system according to claim 1, **characterised in that** said network management system comprises an optimiser coupled to said adaptor for optimising said adapting.

3. Network management system according to claim 2, **characterised in that** said optimising comprises a defining of constants and variables, and a processing of at least one objective and constraints.

4. Network management system according to claim 3, **characterised in that** said information parameters comprise routing parameters and/or capacity parameters.

5. Network management system according to claim 4, **characterised in that** said constants, variables, objective and/or constraints are a function of routing parameters and/or of capacity parameters and/or of intermediate states.

6. Network comprising nodes and a network management system for managing said network comprising said nodes, which network management system comprises a memory for storing information parameters, **characterised in that** said network management system comprises an adaptor coupled to said memory for, in response to a receival of new information parameters, with said memory comprising old information parameters, adapting information parameters in said memory via intermediate states.

7. Method for managing a network comprising nodes, which method comprises a step of storing information parameters in a memory, **characterised in that** said method comprises a step of, in response to a receival of new information parameters, with said memory comprising old information parameters, adapting information parameters in said memory via intermediate states.

8. Method according to claim 7, **characterised in that** said method comprises a step of optimising said adapting.

9. Computer program product to be run via a processor system comprising a processor and a memory for storing information parameters for managing a network comprising nodes, **characterised in that** said computer program product comprises an adapting function for, in response to a receival of new information parameters, with said memory comprising old information parameters, adapting information parameters in said memory via intermediate states.

10. Computer program product according to claim 9, **characterised in that** said computer program product comprises an optimising function for optimising said adapting.

Fig. 1

## European Patent Office

## EUROPEAN SEARCH REPORT

Application Number

EP 01 40 2277

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 889 656 A (NORTHERN TELECOM LTD) 7 January 1999 (1999-01-07) * abstract * * page 2, line 37 - line 48 * * page 2, line 55 - page 3, line 15 * * page 3, line 33 - line 34 * * page 3, line 50 - page 4, line 6 * * page 9, line 24 - page 10, column 12 * * figures 9,10,12-15 * | 1-10 | H04L12/24 |
| A | US 6 078 741 A (MOLONEY SIMON ET AL) 20 June 2000 (2000-06-20) * abstract * * column 2, line 1 - line 34 * * column 3, line 55 - line 65 * * figures 1,2,25 * | 1-10 | |
| A | KODIALAM M ET AL: "Minimum interference routing with applications to MPLS traffic engineering" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, 26 March 2000 (2000-03-26), pages 884-893, XP010376178 ISBN: 0-7803-5880-5 * abstract * * page 884 * pag 885-886, II Requirements for MPLS routing algorithms pag 886, III Problem definition and system model, paragraph 3 | 1-10 | TECHNICAL FIELDS SEARCHED (Int.Cl.7) H04L |

-/--

The present search report has been drawn up for all claims

| Place of search | Date of completion of the search | Examiner |
|---|---|---|
| THE HAGUE | 25 January 2002 | Bertolissi, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent
Office

**EUROPEAN SEARCH REPORT**

Application Number

EP 01 40 2277

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | SOMERS F ET AL: "INTELLIGENT RESOURCE DIMENSIONING IN ATM NETWORKS" ISS '95. WORLD TELECOMMUNICATIONS CONGRESS. (INTERNATIONAL SWITCHING SYMPOSIUM). ADVANCED SWITCHING TECHNOLOGIES FOR UNIVERSAL TELECOMMUNICATIONS AT THE BEGINNING OF THE 21ST. CENTURY. BERLIN, APR. 23 - 28, 1995, PROCEEDINGS OF THE INTERNATIONAL SWIT, vol. 2 SYMP. 15, 23 April 1995 (1995-04-23), pages 62-66, XP000495626 ISBN: 3-8007-2093-0 * abstract * pag 63, 2. Resource activities pag 64, Table 2 | 1-10 | |

TECHNICAL FIELDS
SEARCHED (Int.Cl.7)

The present search report has been drawn up for all claims

| Place of search | Date of completion of the search | Examiner |
|---|---|---|
| THE HAGUE | 25 January 2002 | Bertolissi, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 1 289 189 A1**

**ANNEX TO THE EUROPEAN SEARCH REPORT
ON EUROPEAN PATENT APPLICATION NO.** EP 01 40 2277

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2002

| Patent document cited in search report | | Publication date | Patent family member(s) | | Publication date |
|---|---|---|---|---|---|
| EP 0889656 | A | 07-01-1999 | US | 5970064 A | 19-10-1999 |
| | | | CA | 2230424 A1 | 12-12-1998 |
| | | | EP | 0889656 A2 | 07-01-1999 |
| | | | JP | 11017704 A | 22-01-1999 |
| US 6078741 | A | 20-06-2000 | AU | 6137398 A | 25-08-1998 |
| | | | GB | 2337409 A ,B | 17-11-1999 |
| | | | WO | 9834350 A2 | 06-08-1998 |

FPO FORM P0459

For more details about this annex : see Official Journal of the European Patent Office, No. 12/82